# EUROPÄISCHE PATENTSCHRIFT

(11) **EP 2 993 089 B1**
(45) Veröffentlichungstag und Bekanntmachung des Hinweises auf die Patenterteilung: **13.09.2017**
(21) Anmeldenummer: 15176428.9
(22) Anmeldetag: 13.07.2015
(51) Int. Cl.: B60R 25/021

(54) **SPERRKRANZVERRIEGELUNG**
BLOCKING SPROCKET LOCK
VÉRROUILLAGE DE COURONNE DE BLOCAGE

(30) Priorität: 04.09.2014 DE 102014112749
(43) Veröffentlichungstag der Anmeldung: 09.03.2016
(73) Patentinhaber: Huf Hülsbeck & Fürst GmbH & Co. KG, 42551 Velbert (DE)
(72) Erfinder: Brüggemann, Jürgen, 86899 Landsberg am Lech (DE)

(56) Entgegenhaltungen:
- EP-A1- 2 468 584
- DE-A1- 10 034 350
- DE-A1- 10 300 473
- DE-A1- 19 809 294

## Beschreibung

Die vorliegende Erfindung betrifft eine Sperrkranzverriegelung mit einem Sperrkranz, wobei die Sperrkranzverriegelung zur Verriegelung des Sperrkranzes einer Lenkwelle dient gemäß dem Oberbegriff des Anspruches 1, wobei der Sperrkranz eine Mehrzahl von in Umfangsrichtung angeordneten Zähnen mit jeweils in einer Sperrkranzlängsrichtung verlaufenden Zahnseitenflächen aufweist, wobei die Sperrkranzverriegelung ein Eingriffselement zum Eingreifen zwischen benachbarte Zähne des Sperrkranzes aufweist, wobei das Eingriffselement zwischen einer Eingriffsposition und einer Freigabeposition bewegbar ausgebildet ist, und wobei das Eingriffselement in der Eingriffsposition, bei Einleiten eines Drehmoments in den Sperrkranz, zumindest einen Eingriffsabschnitt zum Einwirken auf eine Zahnseitenfläche eines Zahnes des Sperrkranzes aufweist.

In bekannten Lenkradverriegelungen für Kraftfahrzeuge werden Eingriffselemente oder Sperrbolzen eingesetzt, welche in einen Sperrkranz einer Lenkwelle eingreifen um den Sperrkranz und damit die Lenkwelle zu blockieren. Derartige Lenkradverriegelungen müssen hierbei bestimmten Belastungen Rechnung tragen und werden beispielsweise durch Drehmomenttests bis an die Materialbelastungsgrenze belastet. Hierbei wird ein Eingriffselement über seine seitlichen Kontaktflächen, welche mit den Zahnseitenflächen des Sperrkranzes in Kontakt treten, bis in den plastischen Bereich hin verformt. Aufgrund von Toleranzen und Abweichungen des Rundlaufs von Lenksäule, Sperrkranz und Eingriffselement kann es vorkommen, dass das Eingriffselement in verschiedenen Winkeln in den Sperrkranz eintaucht.

Aus dem Stand der Technik ist weiter die DE19809294A1 bekannt, welche eine Verriegelungsvorrichtung für ein Kraftfahrzeug offenbart. Eine Seitenfläche eines Eingriffsabschnitts in Sperrkranzlängsrichtung, welche einer der Zahnseitenflächen eines Sperrkranzes zugeordnet ist, ist ebenflächig ausgebildet.

Nachteilig im Stand der Technik ist, dass aufgrund des meist rechteckigen Querschnitts des in den Sperrkranz eingreifenden Eingriffselements bzw. aufgrund der ebenen Ausbildung der seitlichen Kontaktflächen, die Gefahr des Verkantens bzw. eines verkantet in den Sperrkranz eintauchenden Eingriffselements besteht. Im Fall eines verkantet eintauchenden Eingriffselements, tritt dieses lediglich an einer seiner Kanten mit einer korrespondierenden Zahnfläche des Sperrkranzes in Kontakt. Dies führt insbesondere im Rahmen hoher Drehmomentbelastungen zu punktuell stark erhöhter Materialbelastung, welche sich teilweise als reine Zugbelastung auf das Eingriffselement auswirkt. Da für das Eingriffselement üblicher Weise eingesetzte Werkstoffe eine deutlich höhere Druckfestigkeit als Zugfestigkeit aufweisen, besteht die Gefahr, dass das Eingriffselement beschädigt wird und sich kleine Bruchstücke ablösen können.

Es ist die der Erfindung zugrunde liegende Aufgabe, eine Lenkradverriegelung anzugeben, welche die aus dem Stand der Technik bekannten Probleme überwindet und welche selbst im Fall eines verkantet in den Sperrkranz eintauchenden Eingriffselements, durch Drehmomenttests an der Materialbelastungsgrenze nicht beschädigt wird.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Sperrkranzverriegelung mit einem Sperrkranz gelöst, wobei die Sperrkranzverriegelung zur Verriegelung des Sperrkranzes einer Lenkwelle dient wobei der Sperrkranz eine Mehrzahl von in Umfangsrichtung angeordneten Zähnen mit jeweils in einer Sperrkranzlängsrichtung verlaufenden Zahnseitenflächen aufweist, wobei die Sperrkranzverriegelung ein Eingriffselement zum Eingreifen zwischen benachbarte Zähne des Sperrkranzes aufweist, wobei das Eingriffselement zwischen einer Eingriffsposition und einer Freigabeposition bewegbar ausgebildet ist, und wobei das Eingriffselement in der Eingriffsposition, bei Einleiten eines Drehmoments in den Sperrkranz, zumindest einen Eingriffsabschnitt zum Einwirken auf eine Zahnseitenfläche eines Zahnes des Sperrkranzes aufweist, wobei der Eingriffsabschnitt des Eingriffselements in der Eingriffsposition in Sperrkranzlängsrichtung der Zahnseitenfläche zumindest teilweise konvex ausgebildet ist, wobei beide Seitenflächen des Eingriffsabschnitts in Sperrkranzlängsrichtung, welche jeweils einer der Zahnseitenflächen zugeordnet sind, konvex ausgebildet sind. Dadurch wird beispielsweise der technische Vorteil erreicht, dass das Eingriffselement bei Einleiten eines Drehmoments eine gleichmäßig verteilte Druckbelastung im Bereich seines Eingriffsabschnitts erfährt. Dadurch wird eine reine Druckbelastung in das Eingriffselement eingeleitet und Beschädigungen im Bereich des Eingriffsabschnitts aufgrund von punktuell hohen Dehnungen werden vermieden.

In einer vorteilhaften Ausführungsform liegt der zumindest teilweise konvex ausgebildete Eingriffsabschnitt des Eingriffselements in der Eingriffsposition mit einem mittleren Bereich des Eingriffsabschnitts an der Zahnseitenfläche an. Dadurch ergibt sich beispielsweise der Vorteil, dass selbst bei einer kontinuierlichen Erhöhung einer Drehmomentbelastung bis in den Bereich plastischer Materialfestigkeit des Eingriffselements hinein, auch die Kontaktfläche zwischen Eingriffsabschnitt und Zahnseitenfläche des Sperrkranzes kontinuierlich zunehmen kann. Trotzdem wird hierbei eine gleichmäßige Spannungsverteilung realisiert.

Vorzugsweise ist ein Abstand zwischen benachbarten Zähnen des Sperrkranzes größer als eine maximale Dicke des Eingriffselements im Bereich des Eingriffsabschnitts. Vorteilhafter Weise ergibt sich dadurch, dass sich das Eingriffselement nicht zwischen den Zähnen des Sperrkranzes verklemmen bzw. verspannen kann.

Nach einer vorteilhaften Ausführungsform weist das Eingriffselement einen Anschlagbereich auf, der in der Eingriffsposition in Sperrkranzlängsrichtung zumindest teilweise konvex und dazu ausgebildet ist, auf einen zwischen benachbarten Zähnen des Sperrkranzes in Sperrkranzlängsrichtung verlaufenden Boden einzuwirken. Dadurch wird beispielsweise der technische Vorteil erreicht, dass Variationen hinsichtlich einer Eintauchtiefe des Eingriffselements zwischen die Zähne des Sperrkranzes ausgeglichen werden können. Eine Variation in der Eintauchtiefe kann beispielsweise aufgrund von Toleranzen zwischen Eingriffselement und Sperrkranz oder auch durch Achsversatz und einem daraus resultierenden schrägen Eintauchen des Eingriffselements in den Sperrkranz erfolgen. Dies ist insbesondere im Fall von Eingriffselementen von Bedeutung, die mittels einer Rotationsbewegung zwischen der Eingriffsposition und der Freigabeposition bewegbar ausgebildet sind.

Gemäß einer weiteren Ausführungsform ist eine Übergangskante zwischen dem Eingriffsabschnitt und einer Anschlagfläche des Eingriffselements stufenförmig ausgebildet. Dadurch wird erreicht, dass ein unvollständig zwischen die Zähne eingreifendes Eingriffselement bei Einleiten eines Drehmoments zusätzlich gegen Herausrutschen gesichert wird. Ein weiterer Vorteil ergibt sich dadurch, dass der konkav verlaufende Übergang von dem Boden des Sperrkranzes zur Zahnseitenfläche mit einer Übergangskante ohne stufenförmige Ausbildung des Eingriffselements in der Eingriffsposition in Kontakt treten würde. Somit könnte kein flächiger Kontakt zwischen Eingriffsabschnitt des Eingriffselements und der Zahnseitenfläche entstehen. Die am unteren Ende des Eingriffsabschnitts stufenförmig ausgebildete Übergangskante ermöglicht somit, dass der flächige Kontakt zwischen Eingriffsabschnitt des Eingriffselements und der Zahnseitenfläche bei Einleiten eines Drehmoments entstehen kann.

Besonders vorzugsweise ist das Eingriffselement aus einem Sintermetall hergestellt. Dadurch wird der Vorteil erreicht, dass die Eingriffselemente besonders preiswert herstellbar sind. Hierbei kann auf bestehende Herstellungsverfahren zurückgegriffen werden, wobei sich die Materialeigenschaften gezielt verändern und an veränderte Gegebenheiten, wie beispielsweise Formgebung, Oberflächenhärtung oder Materialzusammensetzung, anpassen lassen.

Nach einer weiteren Ausführungsform umfasst die Sperrkranzverriegelung eine Rutschkupplung. Dadurch ergibt sich der technische Vorteil, dass Kompromisse hinsichtlich der Festigkeit des Eingriffselements eingegangen werden können. Dies liegt in geltenden gesetzlichen Anforderungen und Normen begründet, welche im Fall einer Lenkwellenverriegelung im Kraftfahrzeugbereich eine reduzierte Versagenslast bei Drehmomenttests vorschreiben, wenn die Sperrkranzverriegelung eine Rutschkupplung umfasst.

Gemäß einer noch weiteren Ausführungsform ist das Eingriffselement durch eine Rotation um einen Drehbolzen zwischen der Eingriffsposition und der Freigabeposition bewegbar ausgebildet. Dadurch wird beispielsweise der Vorteil erreicht, dass die Bewegung des Eingriffselements mechanisch besonders einfach zu realisieren ist und zudem eine im Vergleich zur translatorischen Bewegung des Eingriffselements besonders kompakte Ausbildung möglich ist.

Nach einer möglichen Ausführungsform weist die Sperrkranzverriegelung einen hydraulischen, pneumatischen oder elektrischen Antrieb auf. Das ergibt den technischen Vorteil, dass sich die Bewegung des Eingriffselement, insbesondere im Fall einer rotierend vollzogenen Bewegung zwischen der Eingriffsposition und der Freigabeposition mit praktisch jeder technischen Ausgestaltung umsetzen lässt.

Gemäß einer weiteren möglichen Ausführungsform ist das Eingriffselement in einem Eingriffselementgehäuse angeordnet. Dadurch wird insbesondere erreicht, dass sich die Sperrkranzverriegelung als kompakte Einheit in dem Eingriffselementgehäuse einfach an einem Einbauort integrieren bzw. montieren lässt.

Nach einer besonders vorteilhaften Ausführungsform weist das Eingriffselementgehäuse Stützflächen auf. Dadurch kann das Eingriffselement in der Eingriffsposition, bei Einleiten eines Drehmoments in den Sperrkranz, zusätzlich durch seitliche Anordnung der Stützflächen unterstützt werden. Dies führt insbesondere im Rahmen hoher Drehmomentbelastungen zu reduzierter Materialbelastung, da sich die mechanische Belastung für das Eingriffselement anders verteilt.

Gemäß einer noch vorteilhafteren Ausführungsform ist die Sperrkranzverriegelung in einem Gehäuse angeordnet, welches dazu ausgebildet ist den Sperrkranz und eine Lenkwelle aufzunehmen. Dadurch wird der technische Vorteil erreicht, dass Sperrkranzverriegelung, Sperrkranz und Lenkwelle als kompakte Baugruppe verbaut werden können. Hierbei können insbesondere Toleranzen der zusammenwirkenden Bestandteile der Baugruppe verbessert und damit die Schädigungswahrscheinlichkeit reduziert werden.

Ausführungsbeispiele der Erfindung sind in den Zeichnungen dargestellt und werden im Folgenden näher beschrieben.

Es zeigen:
- Fig. 1: eine schematische Darstellung einer Sperrkranzverriegelung, welche mit einem Sperrkranz in Eingriff steht,
- Fig. 2: eine schematische Darstellung einer Sperrkranzverriegelung gemäß Fig. 1 in einem Eingriffselementgehäuse,
- Fig. 3: eine schematische Darstellung einer Sperrkranzverriegelung,
- Fig. 4: eine schematische Darstellung eines Querschnitts einer Sperrkranzverriegelung, welche mit einem Sperrkranz im Eingriff steht, und
- Fig. 5: eine weitere schematische Darstellung eines Querschnitts einer Sperrkranzverriegelung, welche mit einem Sperrkranz im Eingriff steht.

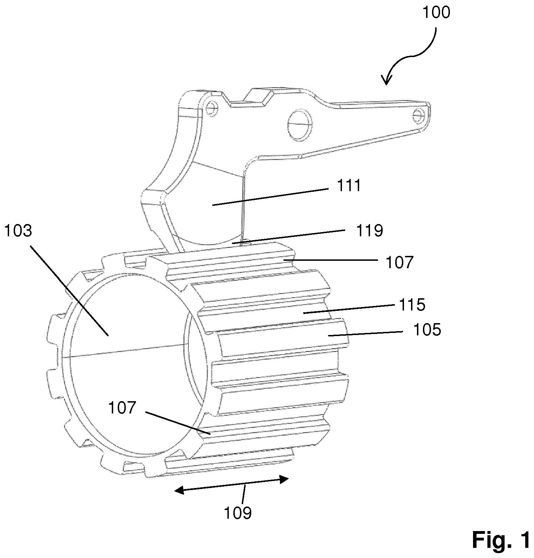

Fig. 1 zeigt eine schematische Darstellung einer Sperrkranzverriegelung 100, welche sich mit einem Sperrkranz 103 in Eingriff befindet. Die Sperrkranzverriegelung 100 verriegelt den Sperrkranz 103, welcher fest mit einer Lenkwelle verbunden ist (nicht gezeigt), indem die Sperrkranzverriegelung 100 mit einem Eingriffselement 111 zwischen benachbarte Zähne 105 des Sperrkranzes 103 eingreift. Der Sperrkranz 103 weist eine Mehrzahl von in Umfangsrichtung angeordneten Zähnen 105 auf, wobei die Zähne 105 jeweils in einer Sperrkranzlängsrichtung 109 verlaufende Zahnseitenflächen 107 aufweisen. Das Eingriffselement 111 ist hierbei derart ausgebildet, dass es zwischen einer Eingriffsposition und einer Freigabeposition bewegbar ist. Die Bewegung zwischen der Eingriffsposition und der Freigabeposition kann hierbei vorzugsweise durch eine Rotation um einen Drehbolzen ausgeführt werden. Alternativ ist es jedoch ebenso möglich, dass die Bewegung zwischen Eingriffsposition und Freigabeposition durch eine Translationsbewegung ausgeführt wird. Hierbei kann die Bewegung der Sperrkranzverriegelung 100 zwischen Eingriffsposition und Freigabeposition hydraulisch, pneumatisch, elektrisch oder jede sonstige denkbare Art und Weise erfolgen. In der Eingriffsposition greift die Lenkradverriegelung 100 mittels eines Eingriffselements 111 zwischen benachbarte Zähne 105 des Sperrkranzes 103 ein blockiert somit eine Rotationsbewegung des Sperrkranzes 103 bzw. der Lenkwelle (nicht gezeigt). Wird in den Sperrkranz 103 ein Drehmoment eingeleitet, während sich das Eingriffselement 111 in der Eingriffsposition zwischen benachbarten Zähnen 105 des Sperrkranz 103 befindet, so wirkt ein Eingriffsabschnitt 119 auf eine Zahnseitenfläche 107 eines Zahnes 105 des Sperrkranzes 103 ein. Um einen Kantenkontakt des Eingriffselements 111 mit der korrespondierenden Zahnfläche 107 des Sperrkranzes 103 zu verhindern, ist der Eingriffsabschnitt 119 des Eingriffselements 111 in Sperrkranzlängsrichtung 109 der Zahnseitenfläche 107 zumindest teilweise konvex ausgebildet. Vorzugsweise ist die zumindest teilweise konvexe Ausbildung des Eingriffsabschnitts 119 beidseitig an dem Eingriffselement 111 ausgebildet um eine Drehmomentbelastung mit der gegenüberliegenden Zahnfläche 107 des Sperrkranzes 103 aufzunehmen. Vorzugsweise ist das Eingriffselement 111 aus einem Sintermetall hergestellt, weil das insbesondere einfach und preiswert herstellbar ist. Alternativ ist es jedoch ebenso denkbar, das Eingriffselement 111 aus einem anderen geeigneten Material oder mittels eines anderen Herstellungsverfahrens herzustellen.

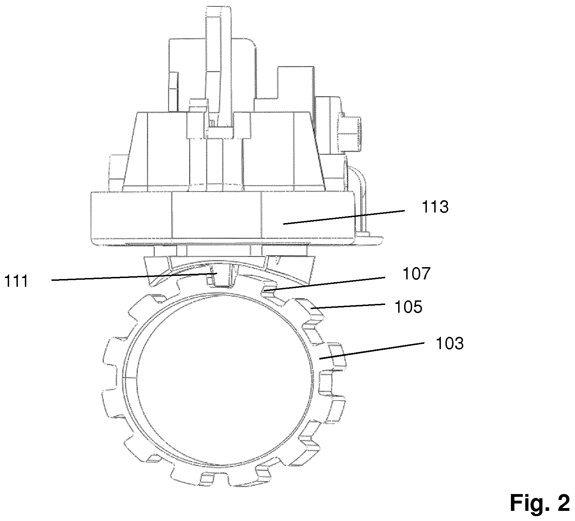

Die Fig. 2 zeigt eine schematische Darstellung einer Sperrkranzverriegelung 100 gemäß der Fig. 1, wobei diese in einem Eingriffselementgehäuse 113 angeordnet ist. Auf eine wiederholte Beschreibung identischer Merkmale der vorausgehenden Figur wird verzichtet. Hierbei lässt sich die Sperrkranzverriegelung 100 mit Eingriffselementgehäuse 113 als kompakte Einheit an einem Einbauort, beispielsweise an der Lenkwelle eines Kraftfahrzeugs, montieren. Zusätzlich kann das Eingriffselementgehäuse 113 Stützflächen (nicht gezeigt) aufweisen. Diese unterstützen das Eingriffselement 111, bei Einleiten eines Drehmoments in den Sperrkranz 103 indem sie bei seitlicher Anordnung an dem Eingriffselement 111 einen Teil der eingebrachten Kraft aufnehmen. Zusätzlich kann die Sperrkranzverriegelung 100 in einem Gehäuse (nicht gezeigt) angeordnet werden, welches neben dem Sperrkranz 103 auch eine Lenkwelle aufnehmen kann.

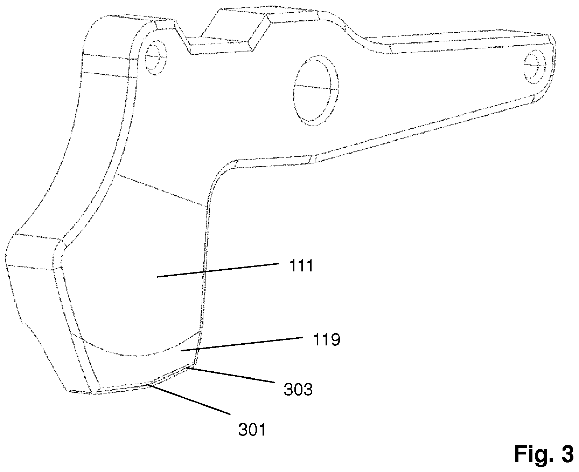

Die Fig. 3 zeigt eine schematische Darstellung eines Eingriffselements 111 der Sperrkranzverriegelung 100. Auf eine wiederholte Beschreibung identischer Merkmale der vorausgehenden Figuren wird verzichtet. Das Eingriffselement 111 zeigt unterhalb des Eingriffsabschnitts 119, welcher die zumindest teilweise konvexe Ausbildung aufweist, einen Anschlagbereich 301 auf. Dieser Anschlagbereich 301 ist in der Eingriffsposition in Sperrkranzlängsrichtung 109 zumindest teilweise konvex ausgebildet und wirkt in Eingriffsposition auf einen zwischen benachbarten Zähnen 105 des Sperrkranzes 103 in Sperrkranzlängsrichtung 109 verlaufenden Boden 115 ein. Zwischen dem Eingriffsabschnitt 119 und einer Anschlagfläche ist eine Übergangskante 303 des Eingriffselements 111 stufenförmig ausgebildet. Diese stufenförmige Ausbildung dient einerseits als Absicherung des Eingriffselements 111 in denjenigen Fällen, in welchen ein unvollständig zwischen die Zähne 105 eingreifendes Eingriffselement 111 bei Einleiten eines Drehmoments herauszurutschen droht. Andererseits ermöglicht der konkav verlaufende Übergang von dem Boden 115 des Sperrkranzes 103 zur Zahnseitenfläche 107, dass ein flächiger Kontakt zwischen Eingriffsabschnitt 119 des Eingriffselements 111 und der Zahnseitenfläche 107 bei Einleiten eines Drehmoments entstehen kann.

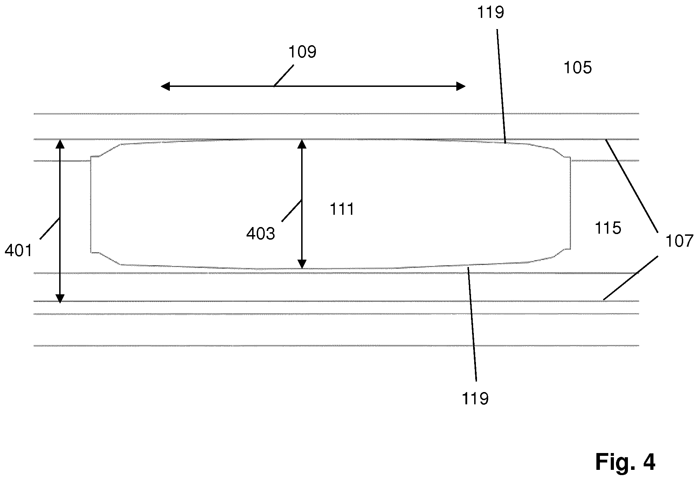

Die Fig. 4 zeigt eine schematische Darstellung eines Querschnitts einer Sperrkranzverriegelung 111, welche mit einem Sperrkranz 103 im Eingriff steht. Auf eine wiederholte Beschreibung identischer Merkmale der vorausgehenden Figuren wird verzichtet. Der zumindest teilweise konvex ausgebildete Eingriffsabschnitt 119 des Eingriffselements 111 liegt in der Eingriffsposition mit einem mittleren Bereich des Eingriffsabschnitts 119 an der Zahnseitenfläche 107 an. Wird nun die in den Sperrkranz 103 eingeleitete Drehmomentbelastung kontinuierlich erhöht so vergrößert sich auch die Kontaktfläche zwischen Eingriffsabschnitt 119 und Zahnseitenfläche 107 des Sperrkranzes 103. Durch die konvexe Ausbildung wird hierbei eine gleichmäßige Spannungsverteilung realisiert. Der Abstand 401 zwischen benachbarten Zähnen 105 des Sperrkranzes 103 ist etwas größer als die maximale Dicke 403 des Eingriffselements 111 im Bereich des Eingriffsabschnitts 119. Der sich ergebende Luftspalt verhindert, dass sich das Eingriffselement 111 zwischen den Zähnen 105 des Sperrkranzes verklemmt.

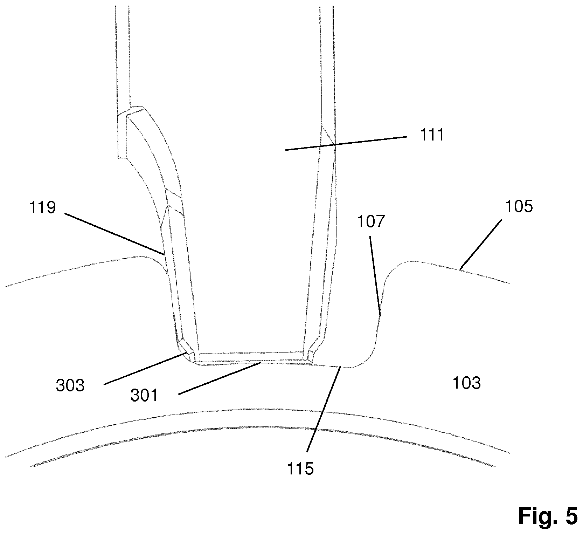

Die Fig. 5 zeigt eine weitere schematische Darstellung eines Querschnitts einer Sperrkranzverriegelung 100, welche mit einem Sperrkranz 103 im Eingriff steht. Durch die am unteren Ende des Eingriffsabschnitts 119 stufenförmig ausgebildete Übergangskante 303 wird der flächige Kontakt zwischen Eingriffsabschnitt 119 des Eingriffselements 111 und der Zahnseitenfläche 107 ermöglicht bzw. verbessert.
Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### BEZUGSZEICHENLISTE

- 100: Sperrkranzverriegelung
- 103: Sperrkranz
- 105: Zähne
- 107: Zahnseitenfläche
- 109: Sperrkranzlängsrichtung
- 111: Eingriffselement
- 113: Eingriffselementgehäuse
- 115: Boden
- 119: Eingriffsabschnitt
- 301: Anschlagbereich
- 303: Übergangskante
- 401: Abstand
- 403: maximale Dicke des Eingriffselements

## Patentansprüche

1. Sperrkranzverriegelung (100) mit einem Sperrkranz (103), wobei die Sperrkranzverriegelung (100) zur Verriegelung des Sperrkranzes (103) einer Lenkwelle dient, wobei der Sperrkranz (103) eine Mehrzahl von in Umfangsrichtung angeordneten Zähnen (105) mit jeweils in einer Sperrkranzlängsrichtung (109) verlaufenden Zahnseitenflächen (107) aufweist, wobei die Sperrkranzverriegelung (100) ein Eingriffselement (111) zum Eingreifen zwischen benachbarte Zähne (105) des Sperrkranzes (103) aufweist, wobei das Eingriffselement (111) zwischen einer Eingriffsposition und einer Freigabeposition bewegbar ausgebildet ist, und wobei das Eingriffselement (111) in der Eingriffsposition, bei Einleiten eines Drehmoments in den Sperrkranz (103), zumindest einen Eingriffsabschnitt (119) zum Einwirken auf eine Zahnseitenfläche (107) eines Zahnes (105) des Sperrkranzes (103) aufweist, **dadurch gekennzeichnet, dass** der Eingriffsabschnitt (119) des Eingriffselements (111) in der Eingriffsposition in Sperrkranzlängsrichtung (109) der Zahnseitenfläche (107) zumindest teilweise konvex ausgebildet ist, wobei beide Seitenflächen des Eingriffsabschnitts (119) in Sperrkranzlängsrichtung (109), welche jeweils einer der Zahnseitenflächen (107) zugeordnet sind, konvex ausgebildet sind.

2. Sperrkranzverriegelung (100) gemäß Anspruch 1, **dadurch gekennzeichnet, dass** der zumindest teilweise konvex ausgebildete Eingriffsabschnitt (119) des Eingriffselements (111) in der Eingriffsposition mit einem mittleren Bereich des Eingriffsabschnitts (119) an der Zahnseitenfläche (107) anliegt.

3. Sperrkranzverriegelung (100) gemäß einem der vorangehenden Ansprüche, **dadurch gekennzeichnet, dass** ein Abstand (401) zwischen benachbarten Zähnen (105) des Sperrkranzes (103) größer ist als eine maximale Dicke (403) des Eingriffselements im Bereich des Eingriffsabschnitts (119).

4. Sperrkranzverriegelung (100) gemäß einem der vorangehenden Ansprüche, **dadurch gekennzeichnet, dass** das Eingriffselement (111) einen Anschlagbereich (301) aufweist, der in der Eingriffsposition in Sperrkranzlängsrichtung (109) zumindest teilweise konvex und dazu ausgebildet ist, auf einen zwischen benachbarten Zähnen (105) des Sperrkranzes (103) in Sperrkranzlängsrichtung (109) verlaufenden Boden (115) einzuwirken.

5. Sperrkranzverriegelung (100) gemäß einem der vorangehenden Ansprüche, **dadurch gekennzeichnet, dass** das eine Übergangskante (303) zwischen dem Eingriffsabschnitt (119) und einer Anschlagfläche des Eingriffselements (111) stufenförmig ausgebildet ist.

6. Sperrkranzverriegelung (100) gemäß einem der vorangehenden Ansprüche, **dadurch gekennzeichnet, dass** das Eingriffselement (111) aus einem Sintermetall hergestellt ist.

7. Sperrkranzverriegelung (100) gemäß einem der vorangehenden Ansprüche, **dadurch gekennzeichnet, dass** die Sperrkranzverriegelung (100) eine Rutschkupplung umfasst.

8. Sperrkranzverriegelung (100) gemäß einem der vorangehenden Ansprüche, **dadurch gekennzeichnet, dass** das Eingriffselement (111) durch eine Rotation um einen Drehbolzen zwischen der Eingriffsposition und der Freigabeposition bewegbar ausgebildet ist.

9. Sperrkranzverriegelung (100) gemäß einem der vorangehenden Ansprüche, **dadurch gekennzeichnet, dass** die Sperrkranzverriegelung (100) einen hydraulischen, pneumatischen oder elektrischen Antrieb aufweist.

10. Sperrkranzverriegelung (100) gemäß einem der vorangehenden Ansprüche, **dadurch gekennzeichnet, dass** das Eingriffselement (111) in einem Eingriffselementgehäuse (113) angeordnet ist.

11. Sperrkranzverriegelung (100) gemäß Anspruch 10, **dadurch gekennzeichnet, dass** das Eingriffselementgehäuse (113) Stützflächen aufweist.

12. Sperrkranzverriegelung (100) gemäß einem der vorangehenden Ansprüche, **dadurch gekennzeichnet, dass** die Sperrkranzverriegelung (100) in einem Gehäuse angeordnet ist, welches dazu ausgebildet ist den Sperrkranz (103) und eine Lenkwelle aufzunehmen.

## Claims

1. A locking collar locking mechanism (100) with a locking collar (103), whereby the locking collar locking mechanism (100) serves to lock the locking collar (103) of a steering shaft, whereby the locking collar (103) has a plurality of teeth (105) positioned in the peripheral direction, each with a lateral tooth surface (107) running longitudinally to the locking collar (109), whereby the locking collar locking mechanism (100) has a gripping element (111) to grip between the adjacent teeth (105) of the locking collar (103), whereby the gripping element (111) is designed to moveable between a position of attack and a released position and whereby the gripping element (111) in the position of engagement has at least one section of attack (119) to act on a lateral tooth surface (107) of a tooth (105) of the locking collar (103) when torque is applied to the locking collar (103), **characterized in that** the section of attack (119) of the gripping element (111) in the position of engagement in the locking collar lateral direction (109) of the lateral tooth surface (107) is designed to be at least partially convex, whereby both lateral surfaces of the section of attack (119) in the locking collar lateral direction (109), which are each allocated to one of the lateral tooth surfaces (107), are designed to be convex.

2. The locking collar locking mechanism (100) according to claim 1, **characterized in that** the section of attack that is designed to be at least partially convex (119) of the gripping element (111) lies against the lateral tooth surface (107) in the position of engagement along with a middle area of the section of attack (119).

3. The locking collar locking mechanism (100) according to any one of the preceding claims, **characterized in that** a gap (401) between the adjacent teeth (105) of the locking collar (103) is larger than a maximum thickness (403) of the gripping element in the area of the section of attack (119).

4. The locking collar locking mechanism (100) according to any one of the preceding claims, **characterized in that** the gripping element (111) has a limit stop range (301) that is at least partially convex in the position of engagement in the locking collar longitudinal direction (109) and is designed to act upon a base (115) running in the locking collar longitudinal direction (109) between adjacent teeth (105) of the locking collar (103).

5. The locking collar locking mechanism (100) according to any one of the preceding claims, **characterized in that** the one transitional edge (303) is designed to have a step-like shape located between the section of attack (119) and a limit-stop surface of the gripping element (111).

6. The locking collar locking mechanism (100) according to any one of the preceding claims, **characterized in that** the gripping element (111) is manufactured from a sintered metal.

7. The locking collar locking mechanism (100) according to any one of the preceding claims, **characterized in that** the locking collar locking mechanism (100) includes a slipping clutch.

8. The locking collar locking mechanism (100) according to any one of the preceding claims, **characterized in that** the gripping element (111) is designed to be rotated around a rotating pin between the position of engagement and the released position.

9. The locking collar locking mechanism (100) according to any one of the preceding claims, **characterized in that** the locking collar locking mechanism (100) has a hydraulic, pneumatic or electrical drive.

10. The locking collar locking mechanism (100) according to any one of the preceding claims, **characterized in that** the gripping element (111) is designed to be located within a gripping element housing (113).

11. The locking collar locking mechanism (100) according to claim 10, **characterized in that** the gripping element housing (113) has supporting surfaces.

12. The locking collar locking mechanism (100) according to any one of the preceding claims, **characterized in that** the locking collar locking mechanism (100) is designed to be located within a housing that is designed to accommodate the locking collar (103) and a steering shaft.

## Revendications

1. Verrouillage de couronne de blocage (100) avec une couronne de blocage (103), le verrouillage de couronne de blocage (100) servant à verrouiller la couronne de blocage (103) d'un arbre de direction, la couronne de blocage (103) comportant une pluralité de dents (105) placées dans la direction périphérique, avec chacune des faces latérales de dent (107) s'étendant dans une direction longitudinale de la couronne de blocage (109), le verrouillage de couronne de blocage (100) comportant un élément d'engagement (111) destiné à s'engager entre des dents (105) voisines de la couronne de blocage (103), l'élément d'engagement (111) étant conçu en étant mobile entre une position d'engagement et une position de libération et dans la position d'engagement, lors de l'introduction d'un couple de rotation dans la couronne de blocage (103), l'élément d'engagement (111) comportant au moins un segment d'engagement (119) destiné à agir sur une face latérale de dent (107) d'une dent (105) de la couronne de blocage (103), **caractérisé en ce que** dans la position d'engagement en direction longitudinale de la couronne de blocage (109) de la face latérale de dent (107), le segment d'engagement (119) de l'élément d'engagement (111) est conçu au moins en partie sous forme convexe, les deux faces latérales du segment d'engagement (119) en direction longitudinale de la couronne de blocage (109), lesquelles sont associées chacune à l'une des faces latérales de dent (107) étant conçues sous forme convexe.

2. Verrouillage de couronne de blocage (100) selon la revendication 1, **caractérisé en ce que** dans la position d'engagement, par une zone centrale du segment d'engagement (119), le segment d'engagement (119) de l'élément d'engagement (111) conçu au moins en partie sous forme convexe est adjacent à la face latérale de dent (107).

3. Verrouillage de couronne de blocage (100) selon l'une quelconque des revendications précédentes, **caractérisé en ce qu'**un écart (401) entre deux dents (105) voisines de la couronne de blocage (103) est supérieur à une épaisseur maximale (403) de l'élément d'engagement dans la zone du segment d'engagement (119).

4. Verrouillage de couronne de blocage (100) selon l'une quelconque des revendications précédentes, **caractérisé en ce que** l'élément d'engagement (111) comporte une zone de butée (301) qui dans la position d'engagement en direction longitudinale de la couronne de blocage (109) est conçue au moins partiellement sous forme convexe et pour agir sur un fond inférieur (115) s'étendant entre des dents (105) voisines de la couronne de blocage (103) en direction longitudinale de la couronne de blocage (109).

5. Verrouillage de couronne de blocage (100) selon l'une quelconque des revendications précédentes, **caractérisé en ce qu'**une arête de passage (303) entre le segment d'engagement (119) et une surface de butée de l'élément d'engagement (111) est conçue en échelons.

6. Verrouillage de couronne de blocage (100) selon l'une quelconque des revendications précédentes, **caractérisé en ce que** l'élément d'engagement (111) est fabriqué en un métal fritté.

7. Verrouillage de couronne de blocage (100) selon l'une quelconque des revendications précédentes, **caractérisé en ce que** le verrouillage de couronne de blocage (100) comprend un accouplement à glissement.

8. Verrouillage de couronne de blocage (100) selon l'une quelconque des revendications précédentes, **caractérisé en ce que** l'élément d'engagement (111) est conçu en étant mobile par une rotation autour d'un boulon de blocage entre la position d'engagement et la position de libération.

9. Verrouillage de couronne de blocage (100) selon l'une quelconque des revendications précédentes, **caractérisé en ce que** le verrouillage de couronne de blocage (100) comporte un entraînement hydraulique, pneumatique ou électrique.

10. Verrouillage de couronne de blocage (100) selon l'une quelconque des revendications précédentes, **caractérisé en ce que** l'élément d'engagement (111) est placé dans un boîtier d'élément d'engagement (113).

11. Verrouillage de couronne de blocage (100) selon la revendication 10, **caractérisé en ce que** le boîtier d'élément d'engagement (113) comporte des surfaces d'appui.

12. Verrouillage de couronne de blocage (100) selon l'une quelconque des revendications précédentes, **caractérisé en ce que** le verrouillage de couronne de blocage (100) est placé dans un boîtier, lequel est conçu pour recevoir la couronne de blocage (103) et un arbre de direction.
